# EUROPÄISCHE PATENTSCHRIFT

(11) **EP 2 343 179 B1**
(45) Veröffentlichungstag und Bekanntmachung des Hinweises auf die Patenterteilung: **12.11.2014**
(21) Anmeldenummer: 10150505.5
(22) Anmeldetag: 12.01.2010
(51) Int. Cl.: B29C 53/36, B29C 53/38, B29C 35/02, F16L 11/08, F16L 55/162, B29C 65/08, B29C 65/16, B29C 73/04

(54) **Ultraschall- und Laserschweißen in der Rohrsanierung**
Ultrasound and laser welding in pipe restoration
Soudure laser à ultrasons dans le cadre de la rénovation de conduites

(43) Veröffentlichungstag der Anmeldung: 13.07.2011
(73) Patentinhaber: TWE Group GmbH, 48282 Emsdetten (DE)
(72) Erfinder: Otte, Carsten, 48477 Riesenbeck (DE); Einhaus, Gerhard, 66978 Leimen (DE)
(74) Vertreter: Claessen, Rolf

(56) Entgegenhaltungen:
- EP-A1- 1 935 618
- EP-A2- 0 844 065
- EP-A2- 0 997 259
- WO-A1-96/36476
- DE-A1- 3 742 852
- US-A- 4 478 661
- US-A1- 2005 041 893

## Beschreibung

Die Erfindung betrifft ein Verfahren zur Herstellung eines Schlauches.

Bislang werden Schläuche aus Vliesmaterial zur Sanierung von Rohren klassisch aus Vliesstoffbahnen zu Schläuchen vernäht und anschließend für die Sanierung von Rohren eingesetzt.

Solch ein Schlauch findet sich beispielsweise In der EP 1 872 049 B1. Diese bislang bekannten Schläuche haben den Nachteil, dass sie zum einen keine sehr hohe Zugfestigkeit an den Nähten aufweisen und zum anderen die Qualität der Verbindung nicht zuverlässig für die gesamte Naht automatisiert dokumentiert werden kann. Bei der Sanierung von Rohren mit Hilfe von Vliesschläuchen werden diese Vliesschläuche nämlich in das Rohr hinein üblicherweise mit Hilfe von Wasserdruck und/oder Luftdruck umgestülpt. Dabei kann gerade an den Nähten des Schlauches eine hohe Zugbelastung entstehen, durch die die bislang eingesetzten Schläuche gerade an den Nähten oft gerissen sind. Zudem gab es bei den bisherigen normal vernähten Schläuchen einen erheblichen ökonomischen Nachteil, da das Vernähen der Schläuche langwierig und umständlich war.

EP 0 844 065 A2 beschreibt ein Verfahren zur Herstellung eines Schlauchliners.

DE 37 42 852 A1 beschreibt die Verwendung flexibler Halbzeuge aus faserverstärkten Kunststoffen zur Herstellung von Hohlkörpern.

US 4,478,661 beschreibt ein Verfahren zur Herstellung von verstärkten faltbaren Schläuchen.

EP 1 935 618 A1 beschreibt ein laserverschweißtes Erzeugnis.

US 2005/0041893 A1 beschreibt ein Verfahren zur Herstellung von einem flexiblen Behälter.

WO 96/36476 A1 beschreibt Verfahren zur Herstellung von rohrförmigen Gebilden und die rohrförmigen Gebilde selbst.

EP 0 997 259 A2 beschreibt ein Verfahren zur Herstellung von einem Schlauchliner.

Aufgabe der vorliegenden Erfindung ist es daher, ein Verfahren zur Herstellung eines Vliesschlauches zur Rohrsanierung bereitzustellen, bei dem Schläuche mit einer hohen Zugfestigkeit an den Nähten erhalten werden können, insgesamt die Schläuche wesentlich schneller hergestellt werden können und zudem die Nahtqualität leichter dokumentiert werden kann.

Diese der Erfindung zugrundeliegende Aufgabe wird In einer ersten Ausführungsform gelöst durch ein Verfahren zur Herstellung eines Schlauches zur Sanierung von Rohren aus zumindest teilweise thermoplastischem Textilmaterial, wobei man die beiden Außenkanten wenigstens einer Bahn eines zumindest teilweise thermoplastischen Textilmaterials mittels Ultraschallschweißen und/oder Laserschweißen verschweißt, wobei man Bahnen des thermoplastischen Textilmaterials in einer Dicke in einem Bereich von 3 bis 12 mm verschweißt und man bei der Verschweißung der Bahnen des zumindest teilweise thermoplastischen Textilmaterials zu einem Schlauch die verschweißung so durchführt, dass eine ununterbrochene Schweißnaht mit einer Breite in einem Bereich von 25 bis 40 mm entsteht.

Bei der Herstellung von Schläuchen aus Textilmaterial wurden Ultraschallschweißen und/oder Laserschweißen bislang nicht eingesetzt, da das klassische Vernähen der Vliesbahnen oder Textilbahnen ausgereicht hatte. Erst die extremen Belastungen, denen ein Textilschlauch bei der Rohrsanierung ausgesetzt ist, haben den technischen Nachteil der bisherigen Lösungen offenbart. Mittels Ultraschallschweißen und/oder Laserschwelßen lassen sich die Textilbahnen zuverlässig und mit einer hohen Zugfestigkeit zu einem Schlauch verschweißen, der dann auch ohne Einschränkungen in der Rohrsanierung eingesetzt werden kann. Zudem haben diese beiden erfindungsgemäßen Schweißverfahren den entscheidenden Vorteil, dass für jeden beliebig kleinen Längenabschnitt der Naht anhand der Parameter exakt nachvolizogen werden kann, wie gut die Qualität der Verbindung der Textilbahnen an der Naht ist. Auch dies war bislang bei der Vernähung der Textilbahnen nicht ohne weiteres möglich. Laserschweißen wurde bislang frontal durchgeführt. Dabei war bislang immer unter dem zu verschweißenden Material ein Reflektor notwendig. Es hat sich nun überraschend herausgestellt, dass beim erfindungsgemäßen Verfahren beispielsweise kein Reflektor notwendig ist, um dennoch gute Ergebnisse bei der Verschweißung zu erzielen.

Vorteilhafterweise setzt man bei dem erfindungsgemäßen Verfahren als Textilmaterial ein Vliesmaterial ein. Das Vlies kann beispielsweise gelegt, gekrämpelt, vernadelt, wasserstrahlverfestigt und/oder chemisch verfilzt sein. Das Vlies kann beispielsweise auch 0,1 bis 80 Gew.-% Glasfasern zur Verstärkung enthalten. Diese Glasfasern kann das Vlies auch beispielsweise in Form eines Verstärkungsgewebes enthalten. Insbesondere kann es sich um einen Nadelfilz mit einem Verstärkungsgewebe, insbesondere einem Glasfaser-Verstärkungsgewebe handeln. Durch den Einsatz eines Verstärkungsgewebes kann man eine Längsdehnung des Schlauches verhindern und gleichzeitig je nach Gewebe eine Dehnung im Umfang des Schlauches zulassen. Das Porenvolumen des erfindungsgemäßen Textilmaterials liegt vorteilhafterweise in einem Bereich von 60 bis 95 %, insbesondere in einem Bereich von 70 bis 90 %. Das Textilmaterial kann beispielsweise überwiegend aus thermoplastischem Material oder aus Glasfaser-verstärktem Kunststoff bestehen. Insbesondere enthält das Textilmaterial überwiegend oder besteht aus Polypropylen, Polyethylen, Polyester und/oder Polyethylenterephthalat.

Vorzugsweise liegt das Flächengewicht des erfindungsgemäßen zumindest teilweise thermoplastischen Textilmaterials in einem Bereich von 50 bis 5000 g/m². **Man führt** das erfindungsgemäße Verfahren bei der Verschweißung der Bahnen des zumindest teilweise thermoplastischen Textilmaterials zu einem Schlauch so durch, dass eine ununterbrochene Schweißnaht mit einer Breite in einem Bereich von 25 bis 40 mm entsteht. Mit den bisherigen Techniken zur Herstellung von Textilschläuchen zur Sanierung von Rohren war es nicht möglich, in der erfindungsgemäßen Breite eine schlüssige und feste Verbindung der Bahnen des zumindest teilweise thermoplastischen Textilmaterials zu erzielen. Es hat sich herausgestellt, dass eine erstmals in dieser Breite mögliche Schweißnaht gerade bei der Sanierung von Rohren den erheblichen Vorteil hat, dass die entstehenden Schläuche eine wesentlich verbesserte Zugfestigkeit gegenüber bisher eingesetzten Textilschläuchen Im Nahtbereich aufweisen.

**Man verschweißt** Bahnen des zumindest teilweise thermoplastischen Textilmaterials mit einer Dicke in einem Bereich von 3 bis 12 mm. Unterhalb dieses Dickenbereiches scheinen die entstehenden Schläuche zumindest teilweise nicht ausreichende Festigkeit für Sanierungsmaßnahmen in Rohren aufzuweisen und zudem statisch weniger tragfähig zu sein. Oberhalb dieser Dicke kann es zu Schwierigkeiten der Umstülpung des Schlauches in die Rohre kommen.

Bei dem erfindungsgemäßen Verfahren verschweißt man vorzugsweise mehrere Bahnen des thermoplastischen Textilmaterials zu einem mehrlaglgen Schlauch. Die Gesamtschlauchstärke kann dabei beispielsweise in einem Bereich von 0,5 bis 100 mm liegen.

Bei dem erfindungsgemäßen Verfahren kann man beispielsweise einen Schlauch mit einem Durchmesser in einem Bereich von 50 bis 3000 mm, insbesondere in einem Bereich von 150 bis 1500 mm, herstellen.

Vorzugsweise misst man beim Verschweißen die Temperatur an der Schweißnaht und regelt die Leistung des Lasers und/oder des Ultraschalls so automatisch nach, dass die Temperatur an der Schweißnaht von einem voreingestellten Sollwert höchstens 3% abweicht. Durch diese erstmals beim erfindungsgemäßen Verfahren mögliche Rückkopplung von Produktionsparametern kann eine hohe Verbindungsqualität der Schweißnaht zum einen besser dokumentiert und zum anderen auch garantiert werden.

Bei dem erfindungsgemäßen Verfahren setzt man vorzugsweise Bahnen des zumindest teilweise thermoplastischen Textilmaterials ein, die auf der späteren Außenseite des entstehenden Schlauchs eine Beschichtung aus einem Material, ausgewählt aus Polyurethan, Polypropylen, Polyethylen und/oder Polyvinylchlorid aufweist. Durch diese Beschichtung kann zum einen bei der Einstülpung des Schlauches in das Rohr bei der Sanierung eine Beschädigung des Textilmaterials weitgehend verhindert werden. Zudem bleibt dadurch unausgehärtetes Harz, mit dem man das Vliesmaterial tränken kann, im Schlauch. Zum anderen erleichtert diese Beschichtung die Umstülpung des Schlauches in das Rohr hinein mit Hilfe von Wasser oder Druckluft. Die Dicke der Beschichtung kann dabei beispielsweise in einem Bereich von 100 bis 2000 µm, insbesondere in einem Bereich von 200 bis 600 µm liegen.

Bei dem erfindungsgemäßen Verfahren können entweder die Außenkanten der Textilbahnen durch Überlappen zu einem Schlauch verschweißt werden. Alternativ können auch auf eine Stoßfuge der beiden Außenkanten der Textilbahn Nahtaußenstreifen und/oder Nahtinnenstreifen vorgesehen werden, die dann wiederum mit der Textilbahn verschweißt werden. Vorzugsweise wird beim erfindungsgemäßen Verfahren in einem ersten Schritt ein Nahtinnenstreifen auf die Stoßfuge der Außenkanten der Textilbahn aufgeschweißt. In einem zweiten Schritt wird dann beispielsweise ein Nahtaußenstreifen auf die Stoßfuge der Außenkanten der Textilbahn aufgeschweißt.

Für das Laserschweißen und/oder Ultraschallschweißen können übliche Parameter zum Einsatz kommen.

Das erfindungsgemäße Verfahren wird vorzugsweise mit einer Geschwindigkeit der Verschweißung in einem Bereich von 10 bis 30 m pro Minute, insbesondere in einem Bereich von 15 bis 25 m pro Minute durchgeführt. Diese Geschwindigkeit hat sich als optimal herausgestellt, um gerade noch die hervorragende Qualität der Schläuche und insbesondere die Zugfestigkeit zu erreichen und dabei einen wesentlich höheren Durchsatz an Schlauchmetern zu erreichen, als dies bei bisher üblichen Verfahren möglich war.

Bei dem erfindungsgemäßen Verfahren werden vorzugsweise alle Prozessparameter genau archiviert, damit später im Unterschied zu bisherigen Verfahren die Produktqualität genau nachvollzogen werden kann.

Mittels des erfindungsgemäßen Verfahrens kann ein Schlauch hergestellt werden, der vorzugsweise eine Schweißnaht mit einer Breite in einem Bereich von 5 bis 50 mm aufweist.

In einer weiteren Ausführungsform wird die der Erfindung zugrundeliegende Aufgabe gelöst durch ein Verfahren zur Sanierung von Rohren, wobei man einen Schlauch mit dem erfindungsgemäßen Verfahren herstellt, diesen mit einem noch nicht ausgehärteten Polymer imprägniert, in das zu sanierende Rohr einbringt und daran anschließend das noch nicht ausgehärtete Polymer aushärtet, um das sanierte Rohr zu erhalten.

Beispielsweise können in dem erfindungsgemäßen Verfahren Abwasserrohre, Frischwasserrohre, Trinkwasserrohre oder Gasleitungen eingesetzt werden. Das erfindungsgemäß sanierte Rohr kann beispielsweise rund, eckig, oval, mit einem Maulprofil, oder mit einem Eiprofil versehen sein. Das mit dem erfindungsgemäßen Verfahren sanierte Rohr kann beispielsweise ein Stahlrohr, ein Betonrohr oder Kunststoffrohr sein. Bei dem erfindungsgemäßen Verfahren zur Sanierung von Rohren kann der zuvor umgestülpte Schlauch mit einem Ende in das zu sanierende Rohr eingeführt werden und dann beispielsweise mit Wasserdruck oder Luftdruck in das zu sanierende Rohr hineingestülpt werden oder alternativ in das zu sanierende Rohr beispielsweise mittels Winde eingezogen werden.

Das nicht ausgehärtete Polymer ist vorzugsweise ausgewählt aus einem Polymer auf Polyesterharzbasis oder Epoxyharzbasis.

### Ausführungsbeispiel:

Zwei 2 m breite und 100 m lange Vliesbahnen aus einem Polypropylenvlies mit einer Dicke von 9 mm und einem Porenvolumen von 85 %, die auf der späteren Innenseite (zur Rohrmitte hin) des Schlauchs eine 300 µm starke Beschichtung aus Polyvinylchlorid aufwiesen, wurden in einem ersten Verfahrensschritt (dem Schlauchbandschweißen) unter der Stoßfuge der Ränder der Bahn mit einem 40 mm breiten Nahtinnenstreifen aus demselben Vliesmaterial verschweißt und anschließend mit Rollen verpresst. Dabei fand die Verschweißung bei einer Bahn durch einen 400 W starken Laserstrahl statt. Im Übrigen wurden übliche Parameter für das Laserschweißen eingestellt. Der Laserstrahl war direkt auf den Punkt der aufeinanderstoßenden Pressrollen fokussiert. Der Nahtinnenstreifen wurde zentriert an die Stoßfuge der Außenkanten der Textilbahn herangeführt.

Die zweite Bahn wurde ähnlich, jedoch mit Ultraschall verschweißt. Dabei wurden beim Ultraschallschweißgerät übliche Parameter eingestellt.

Bei der Verschweißung wurde die Temperatur an der Stelle des Auftreffens des Laserstrahls bzw. der Einwirkungszone des Ultraschalls gemessen und an die Leistungsregelung des Laserstrahls bzw. des Ultraschallschweißgeräts rückgemeldet, um immer eine konstante Temperatur 170 °C (etwa 5 °C über dem Schmelzpunkt von Polypropylen) zu erhalten. Anschließend wurde in einem zweiten Schritt des Dichtbandschweißens ein 40 mm breiter Nahtaußenstreifen aus 150 µm starken PVC-Material, wie der Nahtinnenstreifen auf den nun zusammengelegten Schlauch mit zentrierter Naht zentriert auf die Naht aufgelegt und vor dem Durchführen durch zwei aufeinandertreffende Pressrollen mit gleichen Parametern wie vorstehend, - im Fall der einen Bahn mit Laser, im Fall der anderen Bahn mit Ultraschall - verschweißt. Auch hier wurde die Temperatur an der Schweißstelle ständig gemessen und die Leistung des Lasers bzw. des Ultraschalls entsprechend ständig auf die vorgenannte Temperatur geregelt. Der Schlauch wurde nun mit einem nicht ausgehärteten Polyesterharz imprägniert.

Dieser so erhaltene Schlauch wurde anschließend mit der Beschichtungsseite nach außen um den Umfang eines abgesägten senkrecht stehenden Kunststoffrohres, das etwas größer war als der Durchmesser des Schlauches, herumgespannt. Dieser erste Schritt wurde so durchgeführt, dass nun der erfindungsgemäße Schlauch auf einer Breite von 10 cm des Endstücks des Rohres mit seiner unbeschichteten Seite das Rohr umspannt hat. Anschließend wurde ein Stück des Schlauches in das Rohr hineingestülpt und die so entstehende Tasche mit Wasser gefüllt. Durch die so entstehende Schwerkraft wurde der Rest des Schlauches so in das Rohr hineingezogen, dass die unbeschichtete Außenseite des Schlauches schlüssig an der Innenwand des Rohres anlag.

In dem nun vollständig mit Wasser gefüllten und mit dem Schlauch ausgekleideten Rohr wurde das Wasser nun soweit erhitzt, dass das bislang nicht ausgehärtete Polyesterharz ausgehärtet wurde. Das so behandelte Rohr war nun dauerhaft abgedichtet und damit saniert.

## Patentansprüche

1. Verfahren zur Herstellung eines Schlauches zur Sanierung von Rohren aus zumindest teilweise thermoplastischem Textilmaterial, wobei man die beiden Außenkanten wenigstens einer Bahn eines zumindest teilweise thermoplastischen Textilmaterials mittels Ultraschallschweißen und/oder Laserschweißen verschweißt, wobei man Bahnen des thermoplastischen Textilmaterials in einer Dicke in einem Bereich von 3 bis 12 mm verschweißt und man bei der Verschweißung der Bahnen des zumindest teilweise thermoplastischen Textilmaterials zu einem Schlauch die Verschweißung so durchführt, dass eine ununterbrochene Schweißnaht mit einer Breite in einem Bereich von 25 bis 40 mm entsteht.

2. Verfahren gemäß Anspruch 1, **dadurch gekennzeichnet, dass** man als Textilmaterial ein Vliesmaterial einsetzt.

3. Verfahren gemäß einem der Ansprüche 1 oder 2, **dadurch gekennzeichnet, dass** man mehrere Bahnen des zumindest teilweise thermoplastischen Textilmaterials zu einem mehrlagigen Schlauch verschweißt.

4. Verfahren gemäß einem der Ansprüche 1 bis 3, **dadurch gekennzeichnet, dass** man einen Schlauch mit einem Durchmesser In einem Bereich von 50 bis 3000 mm, insbesondere in einem Bereich von 150 bis 1500 mm herstellt.

5. Verfahren gemäß einem der Ansprüche 1 bis 4, **dadurch gekennzeichnet, dass** man beim Verschweißen die Temperatur an der Schweißnaht misst und die Leistung des Lasers und/oder des Ultraschalls so automatisch nachregelt, dass die Temperatur an der Schweißnaht von einem voreingestellten Sollwert höchstens 3% abweicht.

6. Verfahren gemäß einem der Ansprüche 1 bis 5, **dadurch gekennzeichnet, dass** man Bahnen des thermoplastischen Textilmaterials einsetzt, die auf der späteren Außenseite des entstehenden Schlauchs eine Beschichtung aus einem Material ausgewählt aus Polyurethan, Polypropylen, Polyethylen und/oder Polyvinylchlorid aufweist.

7. Verfahren zur Sanierung von Rohren, **dadurch gekennzeichnet, dass** man einen Schlauch, hergestellt nach dem Verfahren gemäß einem der Ansprüche 1 bis 6, mit einem noch nicht ausgehärteten Polymer imprägniert, in das zu sanierende Rohr einbringt und daran anschließend das noch nicht ausgehärtete Polymer aushärtet, um das sanierte Rohr zu erhalten.

## Claims

1. Method for manufacturing a tube for rehabilitating pipes composed of at least partially thermoplastic textile material, wherein the two outer edges at least of one web of an at least partially thermoplastic textile material are welded by means of ultrasound welding and/or laser welding, wherein webs of the thermoplastic textile material are welded in a thickness in a range from 3 to 12 mm and, during welding of the webs of the at least partially thermoplastic textile material to form a tube, the welding is carried out such that an uninterrupted weld seam with a width in a range from 25 to 40 mm is generated.

2. Method according to Claim 1, **characterized in that** a non-woven material is used as the textile material.

3. Method according to one of Claims 1 or 2, **characterized in that** several webs of the at least partially thermoplastic textile material are welded to form a multi-layer tube.

4. Method according to one of Claims 1 to 3, **characterized in that** a tube with a diameter in a range from 50 to 3000 mm, in particular in a range from 150 to 1500 mm is manufactured.

5. Method according to one of Claims 1 to 4, **characterized in that**, during welding, the temperature at the weld seam is measured and the power of the laser and/or the ultrasound is automatically adjusted so that the temperature at the weld seam deviates from a preset set point value by at most 3%.

6. Method according to one of Claims 1 to 5, **characterized in that** webs of the thermoplastic textile material are used which have, on the subsequent outside of the tube which is generated, a coating composed of a material selected from polyurethane, polypropylene, polyethylene and/or polyvinyl chloride.

7. Method for rehabilitating pipes, **characterized in that** a tube, manufactured according to the method according to one of Claims 1 to 6, is impregnated with an as yet uncured polymer, is inserted into the pipe to be rehabilitated and subsequently the as yet uncured polymer is cured in order to obtain the rehabilitated pipe.

## Revendications

1. Procédé de fabrication d'un tuyau souple en un matériau textile au moins partiellement thermoplastique destiné à la réparation de canalisations, dans lequel les deux bords extérieurs d'au moins une bande de matériau textile au moins partiellement thermoplastique sont soudés au moyen d'un soudage par ultrasons et/ou soudage au laser, dans lequel des bandes du matériau textile au moins partiellement thermoplastique d'une épaisseur dans une plage de 3 à 12 mm sont soudées, et dans lequel, lors de la soudure des bandes du matériau textile au moins partiellement thermoplastique jusqu'à obtenir un tuyau souple, la soudure est réalisée de telle sorte qu'un cordon de soudure ininterrompu et d'une largeur dans une plage de 25 à 40 mm est constitué.

2. Procédé selon la revendication 1, **caractérisé en ce qu'**un matériau non tissé est utilisé en tant que matériau textile.

3. Procédé selon la revendication 1 ou 2, **caractérisé en ce que** plusieurs bandes du matériau textile au moins partiellement thermoplastique sont soudées jusqu'à obtenir un tuyau souple multicouche.

4. Procédé selon l'une quelconque des revendications 1 à 3, caractérisé en qu'un tuyau souple ayant un diamètre dans une plage de 50 à 3 000 mm, en particulier dans une plage de 150 à 1 500 mm, est fabriqué.

5. Procédé selon l'une quelconque des revendications 1 à 4, caractérisé en que la température du cordon de soudure est mesurée durant le soudage, la puissance du laser et/ou des ultrasons étant ainsi réajustée de manière automatique, de sorte que la température au niveau du cordon de soudure s'écarte au maximum de 3% d'une valeur nominale prédéfinie.

6. Procédé selon l'une quelconque des revendications 1 à 5, caractérisé en que sont utilisées des bandes du matériau textile thermoplastique qui, sur le côté extérieur du tuyau souple formé par la suite, présentent un revêtement en un matériau choisi parmi le polyuréthane, le polypropylène, le polyéthylène et/ou du chlorure de polyvinyle.

7. Procédé de réparation de canalisations, **caractérisé en ce qu'**un tuyau souple, fabriqué par l'intermédiaire du procédé selon l'une quelconque des revendications 1 à 6, imprégné d'un polymère pas encore durci, est introduit dans la canalisation à réparer, avec ensuite le durcissement du polymère pas encore durci jusqu'à obtenir la canalisation réparée.
